# EUROPÄISCHE PATENTSCHRIFT

(11) **EP 2 096 003 B1**
(45) Veröffentlichungstag und Bekanntmachung des Hinweises auf die Patenterteilung: **04.05.2011**
(21) Anmeldenummer: 09002621.2
(22) Anmeldetag: 25.02.2009
(51) Int. Cl.: B60R 19/34, B62D 25/08, B62D 27/02

(54) **Trägersystem**
Carrier system
Système de support

(30) Priorität: 28.02.2008 DE 102008012623
(43) Veröffentlichungstag der Anmeldung: 02.09.2009
(73) Patentinhaber: Decoma (Germany) GmbH, 66280 Sulzbach (DE)
(72) Erfinder: Sailer, Gottfried, 73614 Schorndorf (DE); Sader, Jörg, 70736 Fellbach (DE); Prager, Ralf, 73730 Esslingen (DE)
(74) Vertreter: Hössle Patentanwälte Partnerschaft

(56) Entgegenhaltungen:
- WO-A-00/03909
- DE-A1- 10 349 204
- DE-A1- 19 526 398
- DE-A1-102006 025 856
- DE-C1- 19 611 934

## Beschreibung

### Technisches Gebiet

Die Erfindung betrifft ein Trägersystem für ein Fahrzeug, eine Anordnung für ein Fahrzeug und ein Verfahren zur Montage einer Anordnung für ein Fahrzeug.

### Hintergrund der Erfindung

Sog. Crashmanagementsysteme bzw. Träger- oder Aufprallsysteme sind am Rohbau von Kraftfahrzeugen, insbesondere im Frontbereich oder im Heckbereich, angeordnet. Diese Crashmanagementsysteme sind dazu ausgebildet, im Falle eines Aufpralls Stoßenergie zu absorbieren, so dass bspw. tragende Teile eines Karosserieaufbaus durch den Aufprall nicht beschädigt werden und demnach bei einer Reparatur nicht ausgetauscht werden müssen.

Diesbezüglich ist bekannt, eine sog. Crashbox bzw. ein Deformationselement über eine Flanschplatte an einer rohbauseitigen Flanschplatte des Kraftfahrzeugs zu befestigen. Weiterhin wird ein Aggregateträger ebenfalls über einen Flansch bzw. eine Flanschplatte mittelbar am Flansch der Crashbox befestigt. Somit wird am Kraftfahrzeug eine sandwichartige Struktur, die zumindest zwei Flanschplatten umfasst, gebildet.

Bekannt sind auch Systeme, die über einen Flansch am Crashmanagementsystems die Aufnahme des Aggregateträgers bilden. Das Crashmanagementsystem wird dann in Rohbauaufnahmen gesteckt und mit dem Rohbau des Kraftfahrzeugs über den Flansch direkt verbunden. Somit wird der Aggregateträger über den Flansch am Crashmanagementsystem indirekt mit dem Rohbau verbunden.

Im Crashmanagementsystem muss somit ein zusätzlicher Flansch für den Aggregateträger gebildet werden und dieser muss entsprechend ausgelegt sein. Dieser zusätzliche Flansch erhöht allerdings das Gewicht des Systems. Des weiteren werden zusätzliche Befestigungselemente für die Anbindung des Aggregateträgers benötigt.

Die gattungsbildende Druckschrift WO 00/03909 A1 betrifft ein Verfahren zur Herstellung einer Mehrzahl von Endmodulbaugruppen für ein Anbringen an den Enden einer Mehrzahl von teilweise fertiggestellten Kraftfahrzeugen mit verschiedenen Höhen und/oder Breiten an ihren jeweiligen Enden. Im Rahmen dieses Verfahrens sind mehrere Schritte vorgesehen, die das Bereitstellen einer Mehrzahl von äußeren Verkleidungsschürzen sowie von außen sichtbaren Elementen, ein Ausbilden einer Mehrzahl von Stützstrukturen sowie größenbestimmter Komponenten, ein Ausformen der größenbestimmenden Komponenten, ein Ausbilden übriger Komponenten, ein Montieren der größenbestimmenden Komponenten, ein Befestigen der äußeren Verkleidungsschürzen sowie ein Befestigen der äußerlich sichtbaren Komponenten umfasst.

Ein Reparaturteil für eine Tragstruktur ist aus der Druckschrift DE 103 49 204 A1 bekannt. Dieses Reparaturteil ist an einem freien Endbereich eines Gutteils eines Fahrzeuglängsträgers anzubringen, so dass es sich im montierten Zustand bei einem Aufprall Energie absorbierend verformt. Hierzu ist das Reparaturteil als vorgefertigter und eine Crash-Box aufweisender oder bildender Reparaturschuh ausgebildet.

Aus der Druckschrift DE 195 26 398 A1 ist ein Konstruktionsteil für eine Fahrzeugkarosserie bekannt. Dieses Konstruktionsteil erstreckt sich in Vorwärts-/Rückwärtsrichtung des Fahrzeugs derart, dass es im Falle einer Kollision des Fahrzeugs eine Kompressionskraft aufnimmt. Hierzu umfasst das Konstruktionsteil einen vorderen Bereich mit polygonalem Querschnitt, einen mittleren Bereich und einen hinteren Bereich mit ebenfalls polygonalem Querschnitt.

Die Druckschrift DE 196 11 934 C1 betrifft ein Frontmodul für ein Kraftfahrzeug mit jeweils einem unteren als Aufprallträger und einem oberen als Funktionsträger ausgebildeten Querträger, die mit entsprechenden unteren und oberen Längsträger einer Fahrzeugkarosserie verbindbar sind.

Eine Kraftfahrzeugkarosserie für ein Kraftfahrzeug ist aus der Druckschrift DE 10 2006 025 856 A1 bekannt und umfasst einen Längsträger mit einer darin eingeführten Crash-Box. Um diese Crash-Box leicht in den Längsträger einführen zu können, ist diese schmaler ausgebildet als Wandungen des Längsträgers voneinander beabstandet sind.

### Zusammenfassung der Erfindung

Die Erfindung betrifft ein Trägersystem für ein Fahrzeug, typischerweise ein Kraftfahrzeug, das einen Aggregateträger und mindestens ein Crashmanagementsystem, das mindestens einen Biegequerträger und ein, zwei oder mehrere Deformationselemente umfasst, aufweist, wobei der Aggregateträger mindestens ein Deformationselement zumindest abschnittsweise umgreift, und wobei das Trägersystem in mindestens ein Rohbaumodul einer Karosserie des Fahrzeugs einzuschieben ist, so dass der Aggregateträger über das mindestens eine Deformationselement an dem mindestens einen Rohbaumodul festgehalten ist. Das mindestens eine Deformationselement des Aufprall- bzw. Crashmanagementsystems weist mindestens eine Distanzhülse auf, die im Bereich mindestens einer Verschraubung, die zum Befestigen des mindestens einen Deformationselements mit dem mindestens einen Rohbaumodul vorzusehen ist, angeordnet ist.

Bei diesem Trägersystem ist der Aggregateträger üblicherweise direkt an dem mindestens einen Aufprall- bzw. Crashmanagementsystem angeordnet. Weiterhin ist das Trägersystem direkt in das mindestens eine Rohbaumodul einschieb- bzw. einsteckbar.

Ein derartiger Aggregateträger ist als Tragemodul zum Tragen, Anordnen und/oder Aufnehmen mindestens eines Aggregats vorgesehen. Bei einem Aggregat kann es sich z.B. um ein funktionelles Bauteil oder Element für das Fahrzeug, bspw. eine Beleuchtungsvorrichtung, einen Sensor oder einen Stoßfänger handeln.

Demnach ist das Crashmanagementsystem, das auch als Aufprallsystem und je nach Anwendung als Frontendsystem bezeichnet wird, flanschlos ausgebildet. Ein beim Stand der Technik ansonsten benötigter Flansch muss an dem mindestens einen Crashmanagementsystem, bspw. durch Verschweißen, aufwendig befestigt werden. Durch eine Vermeidung von Flanschen bzw. Flanschplatten zwischen dem mindestens einen Deformationselement und dem Aggregateträger oder dem mindestens einen Deformationselement und dem mindestens einen Rohbaumodul können Montageaufwand, Gewicht und Kosten reduziert werden.

Weiterhin kann das mindestens eine Deformationselement in mindestens eine Ausnehmung, in der Regel eine Öffnung, des mindestens einen Rohbaumoduls eingeschoben sein. Falls das Trägersystem bspw. n Deformationselemente aufweist, werden diese üblicherweise in n Ausnehmungen des mindestens einen Rohbaumoduls geschoben. Falls ein derartiges Rohbaumodul jeweils eine Ausnehmung aufweist, wird typischerweise jeweils eines der n Deformationselemente in die eine Ausnehmung des derartigen Rohbaumoduls von n derartiger Rohbaumodule geschoben.

In einer Variante ist das mindestens eine Deformationselement des Crashmanagementsystems mit dem mindestens einen Rohbaumodul zu verschrauben. Zur Aufnahme eines Abschnitts oder Bereichs des Aggregateträgers kann das mindestens eine Deformationselement mindestens einen Außenflächenabschnitt mit einer Verjüngung aufweisen, an dem der Aggregateträger das mindestens eine Deformationselement zumindest teilweise umgreifen kann.

Das Trägersystem kann in einer Variante zusätzlich mindestens ein Gleitsitzmodul aufweisen, über das der Aggregateträger an dem mindestens einen Deformationselement schwimmend und demnach mit Spiel behaftet gelagert ist. Dies kann bedeuten, dass über das mindestens eine Gleitsitzmodul zwischen dem Aggregateträger und dem mindestens einen Deformationselement, bspw. nach der Montage, ein Bewegungsfreiraum bereitgestellt wird, so dass zwischen dem Aggregateträger und dem mindestens einen Deformationselement eine Relativbewegung in zumindest einer Raumrichtung möglich ist.

In Ausgestaltung ist dieses mindestens eine Gleitsitzmodul an der mindestens einen Distanzhülse angeordnet. Es ist auch möglich, dass die mindestens eine Distanzhülse und das mindestens eine Gleitsitzmodul ein bspw. einstückiges Kombinationsteil bilden. Das mindestens eine Gleitzsitzmodul ist in der Regel jeweils im Bereich eines Außenflächenabschnitts des mindestens einen Deformationselements angeordnet. In einer weiteren Alternative kann das mindestens eine Gleitsitzmodul jeweils als ein Bereich des Außenflächenabschnitts des mindestens einen Deformationselements des Crashmanagementsystems ausgebildet sein.

Ein derartiges Gleitsitzmodul kann zumindest abschnittsweise rohrförmig ausgebildet sein. Eine Distanzhülse kann ebenfalls zumindest abschnittsweise rohrförmig ausgebildet sein. In einer möglichen Ausgestaltung sind die mindestens eine Distanzhülse und das mindestens eine Gleitsitzmodul koaxial nebeneinander angeordnet und weisen denselben Durchmesser auf.

In einer Ausführungsform ist der Aggregateträger mit dem mindestens einen Deformationselement des Crashmanagementsystems zumindest abschnittsweise verpresst.

Bei einer möglichen Ausgestaltung ist der Aggregateträger als Frontendträger des Kraftfahrzeugs ausgebildet. Der Aggregateträger kann alternativ oder ergänzend auch als Heckendträger ausgebildet sein.

Das mindestens eine Deformationselement ist typischerweise dazu ausgebildet, im Falle eines Aufpralls des Fahrzeugs, eine dabei entstehende kinetische Energie in Deformationsenergie umzuwandeln, wobei sich das mindestens eine Deformationselement bspw. plastisch oder elastisch verformt. Hierzu kann das mindestens eine Deformationselement aus einem geeigneten plastisch oder elastisch verformbaren Werkstoff, bspw. einem Leichtmetall, in der Regel Aluminium, gebildet sein. Das mindestens eine Rohbaumodul ist üblicherweise aus Stahl gebildet. Der Aggregateträger kann aus einem Kunststoff, bspw. Polypropylen oder Polyamid, oder ggf. Stahl oder aus einem Metall-Kunststoff-Hybrid bzw. einem Metall-Kunststoff-Verbund gebildet sein.

In einer Anwendung weist das Trägersystem mindestens ein Crashmanagementsystem mit mindestens zwei Deformationselementen auf.

Die erfindungsgemäße Anordnung für ein Fahrzeug weist einen Aggregateträger, mindestens ein Crashmanagementsystem mit mindestens einem Deformationselement und mindestens ein Rohbaumodul einer Karosserie des Fahrzeugs auf, wobei der Aggregateträger das mindestens eine Deformationselement des mindestens einen Crashmanagementsystems zumindest abschnittsweise umgreift, und wobei der Aggregateträger und das mindestens eine Deformationselement in das mindestens eine Rohbaumodul eingeschoben sind, so dass der Aggregateträger über das mindestens eine Deformationselement an dem mindestens einen Rohbaumodul festgehalten ist. Diese Anordnung umfasst das beschriebene Trägersystem und das mindestens eine Rohbaumodul ohne jedoch zusätzliche Flansche aufzuweisen.

Demnach ist mindestens ein Trägersystem, das den Aggregateträger und das mindestens eine Deformationselement umfasst, in das mindestens eine Rohbaumodul eingeschoben, wobei der Aggregateträger über das mindestens eine Deformationselement mit dem mindestens einen Rohbaumodul verbunden ist. Der Aggregateträger ist üblicherweise als Tragemodul für weitere Komponenten des Fahrzeugs ausgebildet.

Hierzu kann das mindestens eine Deformationselement direkt, bspw. durch Einstecken bzw. Einschieben in entsprechende Aufnahmen des mindestens einen Rohbaumoduls, mit dem mindestens einen Rohbaumodul verbunden sein. Zudem kann das mindestens eine Deformationselement mit dem mindestens einen Rohbaumodul verschraubt sein. Diese Anordnung umfasst in einer Variante lediglich das mindestens eine Rohbaumodul, das mindestens eine Deformationselement und den Aggregateträger. Auf zusätzliche Elemente, bspw. Flansche, zwischen dem voranstehend genannten Komponenten der Anordnung kann verzichtet werden. Somit wird eine Montage der Anordnung erleichtert und zudem deren Gewicht reduziert.

Das Aufprall- bzw. Crashmanagementsystem weist in der Regel im Bereich des mindestens einen Deformationselements mindestens eine Distanzhülse auf, die im Bereich mindestens einer Verschraubung, die zum Befestigen des mindestens einen Deformationselements mit dem mindestens einen Rohbaumodul vorgesehen ist, angeordnet ist.

Bei dem erfindungsgemäßen Verfahren zur Montage einer Anordnung für ein Fahrzeug wird ein Aggregateträger mit mindestens einem Deformationselement derart verbunden, dass der Aggregateträger das mindestens eine Deformationselement zumindest abschnittsweise umgreift. Ein aus dem Aggregateträger und dem mindestens einen Deformationselement gebildetes Trägersystem wird in mindestens ein Rohbaumodul einer Karosserie des Fahrzeugs eingeschoben, so dass der Aggregateträger über das mindestens eine Deformationselement an dem mindestens einen Rohbaumodul festgehalten wird. Außerdem wird mindestens eine Distanzhülse des mindestens einen Deformationselements im Bereich mindestens einer Verschraubung, die zum Befestigen des mindestens einen Deformationselements mit dem mindestens einen Rohbaumodul vorgesehen ist, angeordnet.

Bei diesem Verfahren wird der Aggregateträger typischerweise direkt an dem mindestens einen Deformationselement und das mindestens eine Deformationselement direkt an dem mindestens einen Rohbaumodul angeordnet.

Des weiteren kann das mindestens eine Deformationselement in mindestens eine Aufnahme des mindestens einen Rohbaumoduls eingeschoben werden. Zusätzlich kann das mindestens eine Deformationselement mit dem mindestens einen Rohbaumodul bspw. verschraubt werden. Dies kann bedeuten, dass das mindestens eine Deformationselement senkrecht zu einer Einschieberichtung, entlang der das mindestens eine Deformationselement in das mindestens eine Rohbaumodul eingeschoben wird, verschraubt wird.

In einer Variante ist vorgesehen, dass der Aggregateträger auf das mindestens eine Deformationselement gesteckt und dann zusammen mit dem mindestens einen Deformationselement in das mindestens eine Rohbaumodul eingeschoben wird. Durch ein anschließendes Verschrauben des mindestens einen Deformationselements mit dem mindestens einen Rohbaumodul entsteht eine Verpressung des Aggregateträgers und des mindestens einen Deformationselements, da sich ein weiterhin vorgesehenes Gleitsitzmodul entsprechend geringfügig aufweiten kann.

Mit der Erfindung ist es möglich, eine Anbindung des Aggregateträgers, bspw. des Frontendträgers, an dem mindestens einen Deformationselement des Crashmanagementsystems zu realisieren, wobei das mindestens eine Deformationselement bspw. in X-Richtung, d. h. in Fahrzeuglängsrichtung, in das mindestens eine Rohbaumodul des Fahrzeugs gesteckt und seitlich in Y-Richtung, je nach detaillierter Ausbildung der beschriebenen Komponenten weitgehend senkrecht zu der Einschieberichtung, verschraubt werden kann, wobei ein Flansch zur Aufnahme des Frontendträgers vermieden wird. Die Montage erfolgt mit geringem Aufwand und es werden nur wenig Zusatzteile verwendet. Bei einer derartigen Montage des Trägersystems dient der Aggregateträger auch als Anschlag für das mindestens eine Deformationselement in besagter X-Richtung, so dass das mindestens eine Deformationselement bei der Montage nicht zu weit in das mindestens eine Rohbaumodul hineingedrückt werden kann.

Zusätzlich ist die Befestigung derart ausgebildet, dass Fertigungstoleranzen ausgeglichen werden können.

Die Erfindung sieht demnach u. a. ein Crashmanagementsystem vor, das bspw. aus einem vorderen Querträger und zwei Deformationselementen bzw. Crashboxen besteht. Die Crashboxen sind so ausgeführt, dass sie in entsprechende Ausnehmungen bzw. Aufnahmen des mindestens einen Rohbaumoduls von vorne gesteckt und anschließend seitlich verschraubt werden können. Um eine Deformation der Crashboxen bei einer Krafteinleitung bei der Verschraubung zu reduzieren, sind im Bereich der Verschraubung Distanzhülsen in den Crashboxen vorzusehen.

Zur Anbindung des bspw. als Frontendträger ausgebildeten Aggregateträgers ist jeweils ein Deformationselement so ausgeführt, dass dieses den Frontendträger in einem oberen Bereich aufnehmen kann. Der als Frontendträger ausgebildete Aggregateträger ist seinerseits schwimmend über das mindestens eine Gleitsitzmodul, bspw. auf der in dem Deformationselement bzw. in der Crashbox angeordneten Distanzhülse, gelagert, um Rohbautoleranzen auszugleichen. Somit kann der Aggregateträger bzw. der Frontendträger über das mindestens eine Geleitsitzmodul an der mindestens einen Distanzhülsen relativ zu dem Deformationselement bewegt werden.

Bei der Montage wird der Frontendträger mit jeweils einer Crashbox in jeweils eine in dem mindestens einen Rohbaumodul vorhandene Aufnahme oder Ausnehmung gesteckt und verschraubt. Durch die bei der Verschraubung entstehende Klemmung werden das mindestens eine Deformationselement und der Aggregateträger in dem mindestens einen Rohbaumodul gesichert.

Weitere Vorteile und Ausgestaltungen der Erfindung ergeben sich aus der Beschreibung und den beiliegenden Zeichnungen. Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.
- Figur 1: zeigt in schematischer Darstellung eine erste Ausführungsform einer erfindungsgemäßen Anord- nung, die eine erste Ausführungsform eines erfin- dungsgemäßen Trägersystems umfasst.
- Figur 2: zeigt in schematischer Darstellung einen Schnitt durch die in Figur 1 gezeigte Anordnung.
- Figur 3: zeigt in schematischer Darstellung eine zweite Ausführungsform einer erfindungsgemäßen Anord- nung, die eine zweite Ausführungsform eines er- findungsgemäßen Trägersystems aufweist.
- Figur 4: zeigt in schematischer Darstellung eine dritte Ausführungsform einer erfindungsgemäßen Anord- nung, die eine dritte Ausführungsform eines er- findungsgemäßen Trägersystems aufweist.

Die Erfindung ist anhand von Ausführungsbeispielen in den Zeichnungen schematisch dargestellt und wird im folgenden unter Bezugnahme auf die Zeichnungen beschrieben.

Die Figuren werden zusammenhängend und übergreifend beschrieben. Gleiche Bezugszeichen bezeichnen gleiche Komponenten.

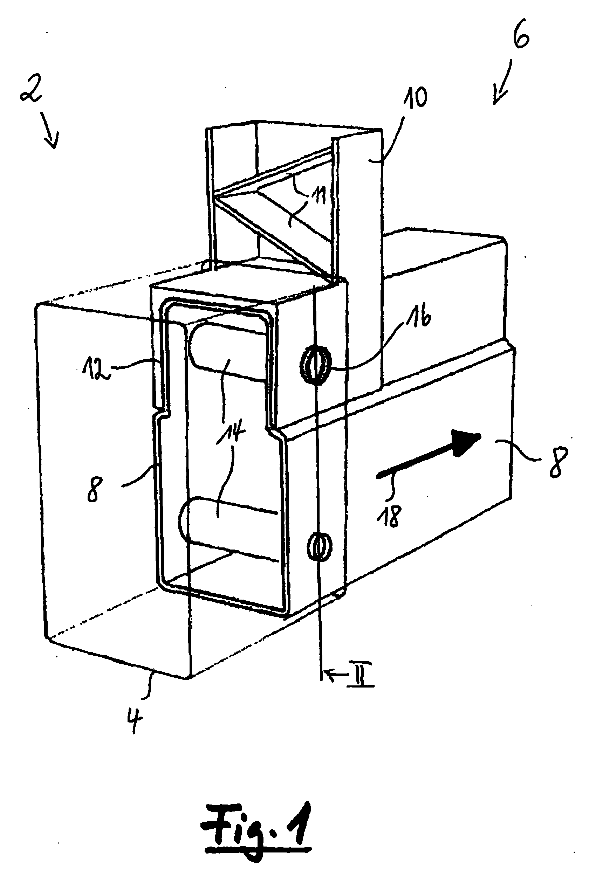

Die in Figur 1 schematisch dargestellte erste Ausführungsform einer erfindungsgemäßen Anordnung 2 umfasst ein Rohbaumodul 4, das als eine Komponente einer nicht weiter dargestellten Karosserie eines hier als Kraftfahrzeug ausgebildeten Fahrzeuge ausgebildet ist, sowie eine erste Ausführungsform eines erfindungsgemäßen Trägersystems 6. Dieses Trägersystem 6 umfasst ein auch als Crashbox bezeichnetes Deformationselement 8 sowie einen in der vorliegenden Ausführungsform als Frontendträger ausgebildeten Aggregateträger 10, der hier Querstreben 11 zur Stabilisierung umfasst.

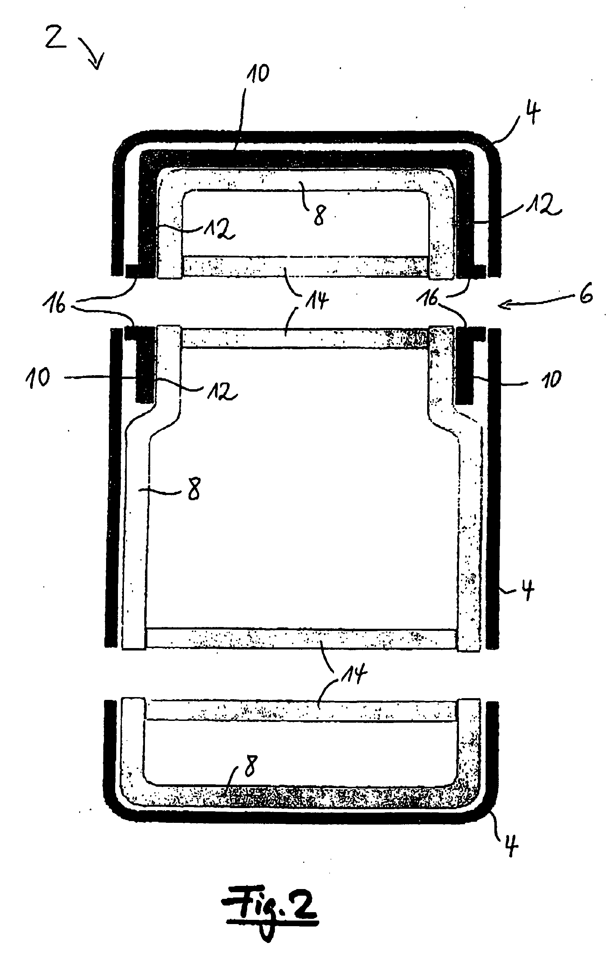

Figur 2 zeigt diese beschriebenen Komponenten der Anordnung 2 entlang einer Schnittlinie II durch Figur 1.

Aus einer Zusammenschau der Figuren 1 und 2 geht hervor, dass das Deformationselement 8 in einem oberen Bereich bzw. in einem Außenflächenabschnitt eine als Verjüngung 12 ausgebildete Aufnahme für den Aggregateträger 10 aufweist. An dieser Verjüngung 12 umgreift der Aggregateträger 10 das Deformationselement 8. Das aus dem Deformationselement 8 und dem Aggregateträger 10 gebildete Trägersystem 6 ist weiterhin in eine als Öffnung ausgebildete Ausnehmung des Rohbaumoduls 4 des Fahrzeugs eingeschoben.

Weiterhin zeigen die Figuren 1 und 2 zwei Distanzhülsen 14 des Deformationselements 8 sowie zwei Gleitsitzmodule 16 als Verbindungselemente zwischen dem Deformationselement 8 und dem Aggregateträger 10. In der vorliegenden Ausführungsform sind die Gleitsitzmodule 16 zweiteilig ausgebildet. Es ist jedoch auch möglich, ein derartiges Gleitsitzmodul 16 einteilig auszubilden. Über ein Gleitsitzmodul 16 ist der Aggregateträger 10 schwimmend an dem Deformationselement 8 gelagert, so dass eine Bewegung des Aggregateträgers 10 relativ zu dem Deformationselement 8 auch nach erfolgter Montage des Trägersystems 6 und somit auch der beschriebenen Anordnung 2 möglich ist.

Zur Montage der hier vorgestellten Anordnung 2 ist vorgesehen, dass der Aggregateträger 10 über die Gleitsitzmodule 16 auf das Deformationselement 8, hier in Fahrzeuglängsrichtung, wie durch den Pfeil 18 in Figur 1 angedeutet, aufgeschoben wird, so dass der Aggregateträger 10 das Deformationselement 8 an der Aufnahme, die hier als Verjüngung 12 des Deformationselements 8 ausgebildet ist, umgreift. Weiterhin wird der Aggregateträger 10 mit dem Deformationselement 8 verbunden und nachfolgend zumindest abschnittsweise verpresst. Das aus dem Deformationselement 8 und dem Aggregateträger 10 durch ein beschriebenes Aneinanderfügen gebildete Trägersystem 6 wird nachfolgend in die als Öffnung ausgebildete Ausnehmung des Rohbaumoduls 4, d. h. im vorliegendem Fall in den Bereich den das Rohbaumodul 4 umschließt, eingeschoben.

Nach einem Einschieben des Trägersystems 6 in die Ausnehmung und somit die Öffnung des Rohbaumoduls 4 wird dieses Trägersystem 6 im Bereich der Distanzhülsen 14 des Deformationselements 8 mit dem Rohbaumodul 4 verschraubt.

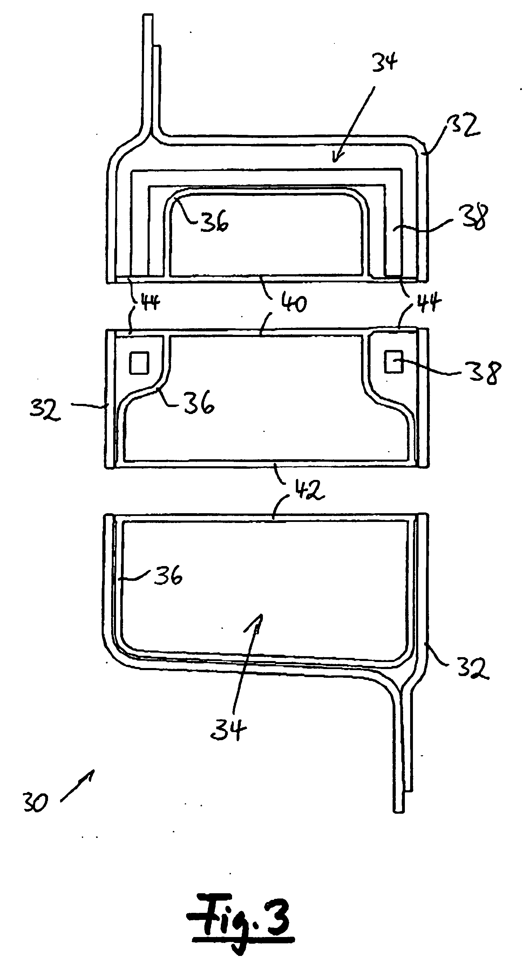

Figur 3 zeigt in schematischer Schnittdarstellung eine zweite Ausführungsform einer erfindungsgemäßen Anordnung 30, die ebenfalls ein Rohbaumodul 32 und eine in eine Ausnehmung des Rohbaumoduls 32 eingeschobene zweite Ausführungsform eines Trägersystems 34 aufweist. Dieses Trägersystem 34 umfasst ein Deformationselement 36 und einen Aggregateträger 38. Dabei sind in der vorliegenden Ausführungsform in dem Deformationselement 36 eine erste Distanzhülse 40 und eine zweite Distanzhülse 42 integriert. Dabei bildet die erste Distanzhülse 40 mit zwei Gleitsitzmodulen 44 ein einstückiges Kombinationsteil.

Bei einer Montage der hier vorgestellten Ausführungsform der Anordnung 30 ist zuerst vorgesehen, dass der Aggregateträger 38 auf das Deformationselement 36 aufgeschoben wird, so dass der Aggregateträger 38 das Deformationselement 36 abschnittsweise umgreift. Über die Gleitsitzmodule 44 ist der Aggregateträger 38 an dem Deformationselement 36 schwimmend gelagert und somit während der Montage relativ zu dem Deformationselement 36 bewegbar. Zur Fertigstellung der Anordnung 30 ist vorgesehen, dass das aus dem Deformationselement 36 und dem Aggregateträger 38 gebildete Trägersystem 34 in eine Ausnehmung, hier eine Öffnung, des Rohbaumoduls 32 eingeschoben wird, so dass das Rohbaumodul 32 das Trägersystem 34 umschließt.

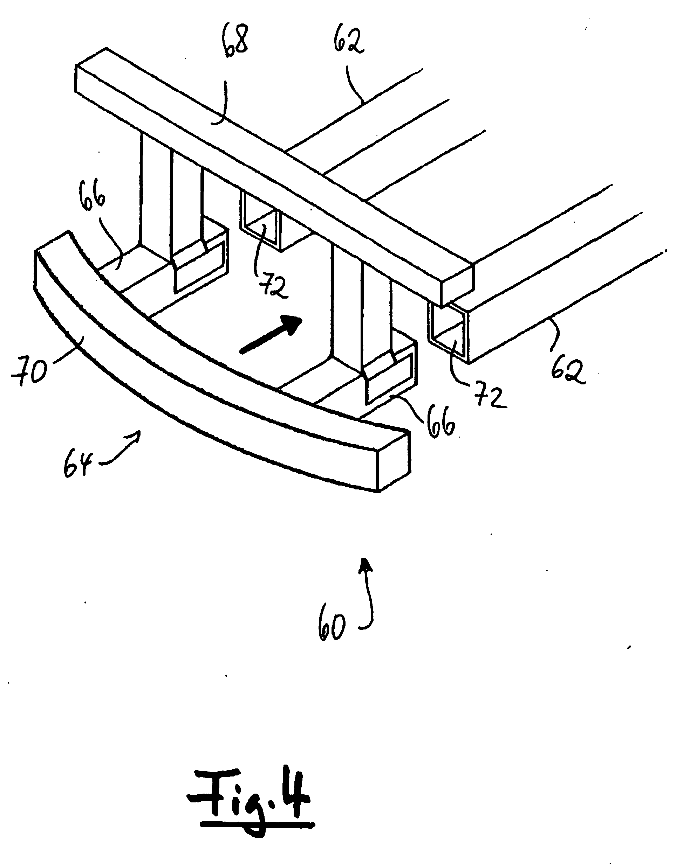

Eine schematische Darstellung einer dritten Ausführungsform einer erfindungsgemäßen Anordnung 60, die zwei Rohbaumodule 62 und eine dritte Ausführungsform eines erfindungsgemäßen Trägersystems 64 umfasst, ist in Figur 4 gezeigt.

Das Trägersystem 64 weist zwei Deformationselemente 66, einen Aggregateträger 68 und einen Biegequerträger 70 auf. Bei einer Montage der Anordnung 60 wird das Trägersystem 64, wie durch den Pfeil angedeutet, in Richtung der beiden Rohbaumodule 62 bewegt. Dabei wird jedes Deformationselement 66 als Komponente des Trägersystems 64 in eine Ausnehmung 72 eines der beiden Rohbaumodule 62 geschoben.

Nach erfolgter Montage ist für die vorgestellten Ausführungsformen der Anordnung 2, 30, 60 mit dem Trägersystem 6, 34, 64 vorgesehen, dass bei einem Aufprall des Fahrzeugs, das die beschriebene Anordnung 2, 30, 60 üblicherweise in einem Front- oder Heckbereich aufweist, die bei dem Aufprall entstehende Aufprallenergie über mindestens ein in den vorliegenden Ausführungsformen aus Aluminium gebildetes Deformationselement 8, 36, 66 in Deformationsenergie umgesetzt wird, wobei das mindestens eine Deformationselement 8, 36, 66 verformt wird. Somit werden je nach Ausführungform mindestens ein Rohbaumodul 4, 32, 62 sowie der Aggregateträger 12, 38, 68 bei einem derartigen Aufprall nur geringfügig beschädigt.

## Patentansprüche

1. Trägersystem für ein Fahrzeug, das einen Aggregateträger (10, 38, 68), mindestens ein Deformationselement (8, 36, 66) und mindestens ein Gleitsitzmodul (16, 44) aufweist, wobei der Aggregateträger (10, 38, 68) das mindestens eine Deformationselement (8, 36, 66) zumindest abschnittsweise umgreift, wobei das Trägersystem (6, 34) in mindestens ein Rohbaumodul (4, 32, 62) einer Karosserie des Fahrzeugs einzuschieben ist, so dass der Aggregateträger (10, 38, 68) über das mindestens eine Deformationselement (8, 36, 66) an dem mindestens einen Rohbaumodul (4, 32, 62) festgehalten ist, wobei der Aggregateträger (10, 38, 68) über das mindestens eine Gleitsitzmodul (16, 44) an dem mindestens einen Deformationselement (8, 36, 66) schwimmend gelagert ist,
**dadurch gekennzeichnet,**
**dass** das mindestens eine Deformationselement (8, 36, 66) mindestens eine Distanzhülse (14, 40, 42) aufweist, die im Bereich mindestens einer Verschraubung, die zum Befestigen des mindestens einen Deformationselements (8, 36, 66) mit dem mindestens einen Rohbaumodul (4, 32, 62) vorzusehen ist, angeordnet ist.

2. Trägersystem nach Anspruch 1, bei dem das mindestens eine Deformationselement (8, 36, 66) in mindestens eine Ausnehmung (72) des mindestens einen Rohbaumoduls (4, 32, 62) einzuschieben ist.

3. Trägersystem nach Anspruch 1 oder 2, bei dem der Aggregateträger (10, 38, 68) mit dem mindestens einen Deformationselement (8, 36, 66) zumindest abschnittsweise verpresst ist.

4. Trägersystem nach einem der voranstehenden Ansprüche, bei dem der Aggregateträger (10, 38, 68) als Frontendträger ausgebildet ist.

5. Trägersystem nach einem der voranstehenden Ansprüche, bei dem das mindestens eine Deformationselement (8, 36, 66) dazu ausgebildet ist, im Falle eines Aufpralls, wenn der Aggregateträger (10, 38, 68) und das mindestens einen Rohbaumodul (4, 32, 62) relativ zueinander bewegt werden, eine dabei entstehende kinetische Energie in Deformationsenergie umzuwandeln, wobei sich das mindestens eine Deformationselement (8, 36, 66) verformt.

6. Anordnung für ein Fahrzeug, die einen Aggregateträger (10, 38, 68), mindestens ein Deformationselement (8, 36, 66), mindestens ein Gleitsitzmodul (16, 44) und mindestens ein Rohbaumodul (4, 32, 62) einer Karosserie des Fahrzeugs aufweist, wobei der Aggregateträger (10, 38, 68) das mindestens eine Deformationselement (8, 36, 66) zumindest abschnittsweise umgreift und der Aggregateträger (10, 38, 68) und das mindestens eine Deformationselement (8, 36, 66) in das mindestens eine Rohbaumodul (4, 32, 62) eingeschoben sind, so dass der Aggregateträger (10, 38, 68) über das mindestens eine Deformationselement (8, 36, 66) an dem mindestens einen Rohbaumodul (4, 32, 62) festgehalten ist, wobei der Aggregateträger (10, 38, 68) über das mindestens eine Gleitsitzmodul (16, 44) an dem mindestens einen Deformationselement (8, 36, 66) schwimmend gelagert ist,
**dadurch gekennzeichnet,**
**dass** das mindestens eine Deformationselement (8, 36, 66) mindestens eine Distanzhülse (14, 40, 42) aufweist, die im Bereich mindestens einer Verschraubung, die zum Befestigen des mindestens einen Deformationselements (8, 36, 66) mit dem mindestens einen Rohbaumodul (4, 32, 62) vorzusehen ist, angeordnet ist.

7. Anordnung nach Anspruch 6, bei der das mindestens eine Deformationselement (8, 36, 66) in mindestens eine Aufnahme des mindestens einen Rohbaumoduls (4, 32, 62) eingeschoben ist.

8. Verfahren zur Montage einer Anordnung für ein Fahrzeug, bei dem ein Aggregateträger (10, 38, 68) mit mindestens einem Deformationselement (B, 36, 66) derart verbunden wird, dass der Aggregateträger (10, 38, 68) das mindestens eine Deformationselement (8, 36, 66) zumindest abschnittsweise umgreift, wobei ein aus dem Aggregateträger (10, 38, 68) und dem mindestens einen Deformationselement (8, 36, 66) gebildetes Trägersystem (6, 34, 64) in mindestens ein Rohbaumodul (4, 32, 62) einer Karosserie des Fahrzeugs eingeschoben wird, so dass der Aggregateträger (10, 38, 68) über das mindestens eine Deformationselement (8, 36, 66) an dem mindestens einen Rohbaumodul (4, 32, 62) festgehalten wird, wobei über mindestens ein Gleitsitzmodul (16, 44) dem Aggregateträger (10, 38, 68) und dem mindestens einen Deformationselement (8, 36, 66) ein Bewegungsfreiraum bereitgestellt wird, so dass bspw. nach der Montage, zwischen dem Aggregateträger (10, 38, 68) und dem mindestens einen Deformationselement (8, 36, 66) eine Relativbewegung in zumindest einer Raumrichtung möglich ist,
**dadurch gekennzeichnet,**
**dass** mindestens eine Distanzhülse (14, 40, 42) des mindestens einen Deformationselements (8, 36, 66) im Bereich mindestens einer Verschraubung, die zum Befestigen des mindestens einen Deformationselements (8, 36, 66) mit dem mindestens einen Rohbaumodul (4, 32, 62) vorgesehen ist, angeordnet wird.

9. Verfahren nach Anspruch 8, bei dem das mindestens eine Deformationselement (8, 36, 66) in mindestens eine Aufnahme des mindestens einen Rohbaumoduls (4, 32, 62) eingeschoben wird.

10. Verfahren nach einem der Ansprüche 8 oder 9, bei dem das mindestens eine Deformationselement (8, 36, 66) mit dem mindestens einen Rohbaumodul (4, 32, 62) verschraubt wird.

11. Verfahren nach Anspruch 10, bei dem das mindestens eine Deformationselement (8, 36, 66) senkrecht zu einer Einschieberichtung, entlang der das mindestens eine Deformationselement (8, 36, 66) in das mindestens eine Rohbaumodul (4, 32, 62) eingeschoben wird, verschraubt wird.

12. Verfahren nach einem der Ansprüche 8 bis 11, bei dem der Aggregateträger (10, 38, 68) mit dem mindestens einen Deformationselement (8, 36, 66) zumindest abschnittsweise verpresst wird.

## Claims

1. Carrier system for a vehicle, comprising an aggregate carrier (10, 38, 68), at least one deformation element (8, 36, 66) and at least one sliding seat module (16, 44), wherein the aggregate carrier (10, 38, 68) encloses at least portions of the at least one deformation element (8, 36, 66), wherein the carrier system (6, 34) is to be slid into at least one shell module (4, 32, 62) of a body of the vehicle so that the aggregate carrier (10, 38, 68) is secured to the at least one shell module (4, 32, 62) by the at least one deformation element (8, 36, 66), wherein the aggregate carrier (10, 38, 68) is mounted in a floating manner by the at least one sliding seat module (16, 44) at the at least one deformation element (8, 36, 66),
**characterized in that**
the at least one deformation element (8, 36, 66) comprises at least one spacer sleeve (14, 40, 42) arranged in the region of at least one screw joint provided for attaching the at least one deformation element (8, 36, 66) to the at least one shell module (4, 32, 62).

2. Carrier system according to Claim 1, wherein the at least one deformation element (8, 36, 66) is to be slid into at least one recess (72) of the at least one shell module (4, 32, 62).

3. Carrier system according to Claim 1 or 2, wherein the aggregate carrier (10, 38, 68) is press-fitted at least in portions to the at least one deformation element (8, 36, 66).

4. Carrier system according to one of the preceding Claims, wherein the aggregate carrier (10, 38, 68) is designed as a front-end carrier.

5. Carrier system according to one of the preceding Claims, wherein the at least one deformation element (8, 36, 66) is designed so that in case of a shock, when the aggregate carrier (10, 38, 68) and the at least one shell module (4, 32, 62) are moved with respect to each other, a kinetic energy generated in this process is converted to deformation energy deforming the at least one deformation element (8, 36, 66).

6. Arrangement for a vehicle, comprising an aggregate carrier (10, 38, 68), at least one deformation element (8, 36, 66), at least one sliding seat module (16, 44) and at least one shell module (4, 32, 62) of a body of the vehicle, wherein the aggregate carrier (10, 38, 68) encloses at least portions of the at least one deformation element (8, 36, 66) and the aggregate carrier (10, 38, 68) and the at least one deformation element (8, 36, 66) are slid into the at least one shell module (4, 32, 62) so that the aggregate carrier (10, 38, 68) is secured to the at least one shell module (4, 32, 62) by the at least one deformation element (8, 36, 66), wherein the aggregate carrier (10, 38, 68) is mounted in a floating manner by the at least one sliding seat module (16, 44) at the at least one deformation element (8, 36, 66),
**characterized in that**
the at least one deformation element (8, 36, 66) comprises at least one spacer sleeve (14, 40, 42) arranged in the region of at least one screw joint provided for attaching the at least one deformation element (8, 36, 66) to the at least one shell module (4, 32, 62).

7. Arrangement according to Claim 6, wherein the at least one deformation element (8, 36, 66) is slid into at least one support of the at least one shell module (4, 32, 62).

8. Method of mounting an arrangement for a vehicle, wherein an aggregate carrier (10, 38, 68) is connected to at least one deformation element (8, 36, 66) so that the aggregate carrier (10, 38, 68) encloses at least portions of the at least one deformation element (8, 36, 66), wherein a carrier system (6, 34, 64) constituted of the aggregate carrier (10, 38, 68) and the at least one deformation element (8, 36, 66) is slid into at least one shell module (4, 32, 62) of a body of the vehicle so that the aggregate carrier (10, 38, 68) is secured to the at least one shell module (4, 32, 62) by the at least one deformation element (8, 36, 66), wherein the aggregate carrier (10, 38, 68) and the at least one deformation element (8, 36, 66) are provided with a freedom of movement by at least one sliding seat module (16, 44) so that after the assembly, for example, a relative movement in at least one spatial direction between the aggregate carrier (10, 38, 68) and the at least one deformation element (8, 36, 66) is enabled,
**characterized in that**
the at least one spacer sleeve (14, 40, 42) of the at least one deformation element (8, 36, 66) is arranged in the region of at least one screw joint provided for attaching the at least one deformation element (8, 36, 66) to the at least one shell module (4, 32, 62).

9. Method according to Claim 8, wherein the at least one deformation element (8, 36, 66) is slid into at least one support of the at least one shell module (4, 32, 62).

10. Method according to one of Claims 8 or 9, wherein the at least one deformation element (8, 36, 66) is screwed to the at least one shell module (4, 32, 62).

11. Method according to Claim 10, wherein the at least one deformation element (8, 36, 66) is screwed perpendicularly to a sliding-in direction along which the at least one deformation element (8, 36, 66) is slid into the at least one shell module (4, 32, 62).

12. Method according to one of Claims 8 to 11, wherein the aggregate carrier (10, 38, 68) is press-fitted at least in portions to the at least one deformation element (8, 36, 66).

## Revendications

1. Système porteur pour un véhicule, qui comprend un support pour sous-ensemble (10, 38, 68), au moins un élément à déformation (8, 36, 66) et au moins un module à siège coulissant (16, 44), ledit support pour sous-ensemble (10, 38, 68) entourant ledit au moins un élément à déformation (8, 36, 66) au moins par tronçons, ledit système porteur (6, 34) étant destiné à être enfilé dans au moins un module de structure brute (4, 32, 62) d'une carrosserie du véhicule, de sorte que le support pour sous-ensemble (10, 38, 68) est immobilisé sur ledit au moins un module de structure brute (4, 38, 62) via ledit au moins un élément à déformation (8, 36, 66), et le support pour sous-ensemble (10, 38, 68) est monté en flottement sur ledit au moins un élément à déformation (8, 36, 66) via ledit au moins un module à siège coulissant (16, 44),
**caractérisé en ce que**
ledit au moins un élément à déformation (8, 36, 66) comprend au moins une douille d'écartement (14, 40, 42) qui est agencée dans la région d'au moins un vissage, qui est prévu pour fixer ledit au moins un élément à déformation (8, 36, 66) avec ledit au moins un module de structure brute (4, 32, 62).

2. Système porteur selon la revendication 1, dans lequel ledit au moins un élément à déformation (8, 36, 66) est destiné à être enfilé dans au moins un évidement (72) dudit au moins un module de structure brute (4, 32, 62).

3. Système porteur selon la revendication 1 ou 2, dans lequel le support pour sous-ensemble (10, 38, 68) est assemblé au moins par tronçons par pressage avec ledit au moins un élément à déformation (8, 36, 66).

4. Système porteur selon l'une des revendications précédentes, dans lequel le support pour sous-ensemble (10, 38, 68) est réalisé comme un support d'extrémité avant.

5. Système porteur selon l'une des revendications précédentes, dans lequel ledit au moins un élément à déformation (8 36, 66) est réalisé pour, dans le cas d'une collision, quand le support pour sous-ensemble (10, 38, 68) et ledit au moins un module de structure brute (4, 32, 62) sont déplacés l'un par rapport à l'autre, convertir une énergie cinétique apparaissant ici dans une énergie de déformation, telle que ledit au moins un élément à déformation (8, 36, 66) se déforme.

6. Agencement pour un véhicule, qui comprend un support pour sous-ensemble (10, 38, 68), au moins un élément à déformation (8, 36, 66), au moins un module à siège coulissant (16, 44) et au moins un module de structure brute (4, 32, 62) d'une carrosserie du véhicule, dans lequel le support pour sous-ensemble (10, 38, 68) entoure ledit au moins un élément à déformation (8, 36, 66) au moins par tronçons et le support pour sous-ensemble (10, 38, 68) et ledit au moins un élément à déformation (8, 36, 66) sont enfilés dans ledit au moins un module de structure brute (4, 32, 62), de sorte que le support pour sous-ensemble (10, 38, 68) est immobilisé sur ledit au moins un module de structure brute (4, 32, 62) via ledit au moins un élément à déformation (8, 36, 66), et le support pour sous-ensemble (10, 38, 68) est monté en flottement sur ledit au moins un élément à déformation (8, 36, 66) via ledit au moins un module à siège coulissant (16, 44),
**caractérisé en ce que**
ledit au moins un élément à déformation (8, 36, 66) comprend au moins une douille d'écartement (14, 40, 42), qui est agencée dans la région d'au moins un vissage, qui est prévu pour fixer ledit au moins un élément à déformation (8, 36, 66) avec ledit au moins un module de structure brute (4, 32, 62).

7. Agencement selon la revendication 6, dans lequel ledit au moins un élément à déformation (8, 36, 66) est enfilé dans au moins un logement dudit au moins un module de structure brute (4, 32, 62).

8. Procédé pour le montage un agencement pour un véhicule, dans lequel un support pour sous-ensemble (10, 38, 68) est relié à au moins un élément à déformation (8, 36, 66) de telle façon que le support pour sous-ensemble (10, 38, 68) entoure ledit au moins un élément à déformation (8, 36, 66) au moins par tronçons, et un système porteur (6, 34, 64), formé par le support pour sous-ensemble (10, 38, 68) et par ledit au moins un élément à déformation (8, 36, 66), est enfilé dans au moins un module de structure brute (4, 32, 62) d'une carrosserie du véhicule, de sorte que le support pour sous-ensemble (10, 38, 68) est immobilisé sur ledit au moins un module de structure brute (4, 32, 62) via ledit au moins un élément à déformation (8, 36, 66), et un espace libre de déplacement est assuré au support pour sous-ensemble (10, 38, 68) et audit au moins un élément à déformation (8, 36, 66) via au moins un module à siège coulissant (16, 44), de sorte que, par exemple après le montage, un mouvement relatif est possible, dans au moins une direction dans l'espace, entre le support pour sous-ensemble (10, 38, 68) et ledit au moins un élément à déformation (8, 36, 66),
**caractérisé en ce qu'**au moins une douille d'écartement (14, 40, 42) dudit au moins un élément à déformation (8, 36, 66) est agencée dans la région d'au moins un vissage, qui est prévu pour la fixation dudit au moins un élément à déformation (8, 36, 66) avec ledit au moins un module de structure brute (4, 32, 62).

9. Procédé selon la revendication 8, dans lequel ledit au moins un élément à déformation (8, 36, 66) est enfilé dans au moins un logement dudit au moins un module de structure brute (4, 32, 62).

10. Procédé selon l'une des revendications 8 ou 9, dans lequel ledit au moins un élément à déformation (8, 36, 66) est vissé avec ledit au moins un module de structure brute (4, 32, 62).

11. Procédé selon la revendication 10, dans lequel ledit au moins un élément à déformation (8, 36, 66) est vissé perpendiculairement à une direction d'enfilement, le long de laquelle ledit au moins un élément à déformation (8, 36, 66) est enfilé dans ledit au moins un module de structure brute (4, 32, 62).

12. Procédé selon l'une des revendications 8 à 11, dans lequel le support pour sous-ensemble (10, 38, 68) est assemblé au moins par tronçons par pressage avec ledit au moins un élément à déformation (8, 36, 66).
